Europäisches Patentamt

European Patent Office

Office européen des brevets

(11) Publication number: 0 182 667
A2

# EUROPEAN PATENT APPLICATION

(21) Application number: 85308484.6

(51) Int. Cl.4: **A01G 25/14** , **B05B 11/02**

(22) Date of filing: 21.11.85

(30) Priority: 21.11.84 GB 8429370

(43) Date of publication of application:
28.05.86 Bulletin 86/22

(84) Designated Contracting States:
AT BE CH DE FR IT LI LU NL SE

(71) Applicant: **Plantpak Limited**
**Burnham Road**
**Mundon, Maldon, Essex CM9 6NT(GB)**

(72) Inventor: **Hindmarch, Michael William**
**Riffhams Danbury**
**Essex(GB)**

(74) Representative: **Green, Alan James et al**
**Sanderson & Co. 97 High Street**
**Colchester Essex C01 1TH(GB)**

(54) Liquid dispensing device.

(57) The invention provides a liquid dispensing device suitable for dispensing water to plants disposed in a hanging basket or like plant holder. The device of the invention comprises a sealable bottle or like container for holding a reservoir of liquid, the bottle having an upper mouth and including a handle. A piston-cylinder pump is mounted sealed in the bottle mouth and has a feed tube arranged to dip into the lower portion of the bottle. Liquid from a reservoir held in the bottle can then be fed to the pump cylinder on an upstroke through a first valve arrangement adjacent the lower end of the cylinder. Also, the pump includes a hollow piston rod having a second valve arrangement adjacent the upper end thereof through which the pump on a downstroke can upwardly dispense liquid supplied to the cylinder from the reservoir via the first valve. The device includes an elongated dispensing tube reciprocable with the piston rod to receive liquid dispensed from the piston rod, and handle means to permit the rod and dispensing tube combination to be gripped and held steady with a hand. Then, when the rod and dispensing tube are held steady with one hand, and the container is held and reciprocated with the other hand, liquid can be pumped from the container reservoir and dispensed from the end of the dispensing tube remote from the container at a height well above the head of the operator.

FIG.6

## LIQUID DISPENSING DEVICE

The present invention relates to a liquid dispensing device and, in particular, to a device for dispensing water to plants disposed in a hanging plant holder.

In recent years the popularity of hanging baskets, wall baskets and like hanging plant holders has significantly increased. Particularly in the case of hanging baskets, such plant holders may be disposed above head height and pose problems in terms of maintaining an adequate water supply to the plants contained therein. Thus, it is particularly inconvenient to supply water to such plant holders by simple conventional means such as, for example, by the use of a watering can. Also, while more sophisticated devices have been proposed, they pose problems by virtue of their very sophistication. In particular, devices based on an initial pressurisation of a container for water are expensive and, moreover, they require an initial pressurisation operation before they can be used. Such an operation requires time and effort, which can be a significant drawback where relatively instant useability is required.

Accordingly, there is a need for a form of water dispensing device which is relatively simple to operate and relatively inexpensive, but which at the same time can conveniently dispense a useful amount of water to a plant holder at a height above that of the head of the operator. In that respect, we have found that a variety of device arrangements are unsuitable for the required operation, in particular pistol arrangements based on a trigger pump action - where the volume of water delivered is too small - and bellows devices where operation is too difficult (by virtue of the stiffness of the bellows) when the device is held with the arms stretched upwards. However, we have also found surprisingly that a suitable device can be constructed by using a piston-cylinder pump and an arrangement which relies on a two-arm reciprocal action to operate it.

British Specification No. 4639 of 1915 relates to a spray producer of the kind then known as a "bottle sprayer". Such bottle sprayers are disclosed as being for spraying insecticide or other like liquids and of being of the kind in which a barrel of a small force pump passes through a neck or stopper of a bottle containing the liquid to be sprayed, the pump barrel being fitted with a tubular plunger which projects through the top of the barrel. At the upper end of the plunger a spray nozzle is fitted and so arranged that the liquid is forced through the nozzle by moving the tubular plunger up and down. The object of the earlier invention is to provide a spray producer of the kind described in which the force pump is double-acting so that the liquid will be sprayed through the nozzle on the upstroke as well as on the downstroke of the pump, and which will work equally well with the bottle held vertically or horizontally or considerably inclined to the vertical. It is thus said that the spray producer will be more serviceable than those of the kind referred to already then known.

According to the earlier invention, a guard or grating is provided which limits the rise of a ball valve in the bottom of the pump barrel and prevents it rolling too far from its seating, even when the device is held horizontally. Also, in order to make the pump double acting, there is in the tubular plunger stem and at a short distance above the piston or plunger one or more small outlet holes leading into the annular space between the pump plunger and the barrel. However, as described more fully later in a related British Specification No. 230,297 published in 1925, means must be provided to prevent the escape of any air or liquid between the plunger rod and the barrel cap. Furthermore, such sprayers are liable to leak between the sliding plunger and the pump barrel if a considerable period elapses between their manufacture and use. Thus, as indicated in the second of the above-mentioned earlier disclosures, this is particularly the case in connection with sprayers which are manufactured for use abroad, so that upon reaching their destination, they are often in a leaking condition. This is so because the packing or washer employed to prevent such leakage does not function properly and, furthermore it is not always easily accessible for the necessary attention. Thus, it is the object of the second earlier invention to solve the problem of leakage by the provision of additional packing adapted to be compressed against a shoulder so that pressure can be applied to force it into contact with the sliding plunger.

There is nothing expressed or implied in either or both of the earlier disclosures to suggest use of the disclosed devices in the effective watering of hanging baskets or the like. In particular, both earlier inventions are concerned with solving problems related to the spraying of a small amount of active liquid such as an insecticide rather than with the supplying of a much larger amount of liquid as in the watering of hanging baskets. Also, there is no suggestion that the disclosed devices could be used or modified for use in dispensing a larger amount of liquid at a significant distance above the head height of the operator.

Thus, according to the present invention there is provided a liquid dispensing device suitable for dispensing water to plants disposed in a hanging plant holder, which device comprises a sealable container for holding a reservoir of liquid, the container having an upper mouth and including means to hold the container with a hand, a piston-cylinder pump having a feed tube arranged to dip into the lower portion of a liquid reservoir when held in the container to feed liquid to the pump cylinder through a first valve arrangement adjacent the lower end of the cylinder, the pump being sealingly mounted in the upper container mouth, and the pump including a hollow piston rod having a second valve arrangement therein, typically adjacent the upper end thereof, through which the pump on a downstroke can upwardly dispense liquid previously supplied on an upstroke to the cylinder from the reservoir via the first valve, an elongated dispensing tube reciprocable with the piston rod to receive liquid dispensed from the piston rod, and means to permit the rod and dispensing tube combination to be gripped and held steady with a hand, the device being arranged such that when the rod and dispensing tube are held steady with one hand and the container is held and reciprocated with the other hand, liquid can be pumped from the container reservoir and dispensed from the end of the dispensing tube remote from the container.

In the device of the invention, the container may be formed of any suitable material and may be of any desired capacity. Typically, however, the container may be a clear or coloured, transparent or partially transparent container formed of a lightweight material such as a plastics material, for example, polyvinyl chloride, and having a capacity of from about 1 to about 2.5 litres, e.g. about 2 litres. Furthermore, the container preferably includes an integrally formed handle and may include a capped filling aperture separate from its upper mouth.

Typically, the piston-cylinder pump may be one wherein either or both of the first and second valves are ball valves. Preferably, however, the pump comprises a combination of a first valve which is a flap valve and a second valve which is a ball valve (to minimise suck-back) and, in addition, the pump preferably should have an unbiassed action, to permit of ease of pumping action, and to permit of flow control sufficient to provide a "dribble" of water. Thus, preferably there should be no means associated with the pump (other than the said gripping/holding means) to return the piston to any one particular rest position.

More preferably, the second valve is a ball valve comprising an arrangement in which the valve ball is restrained in one direction, i.e. when the valve is closed, by a valve seating in the piston rod, preferably one adjacent the upper end of the piston rod, and in the other direction, i.e. when the valve is open, by a restraining element disposed above and spaced from the seating, preferably within part of the dispensing tube, so that the ball can travel between the seating and the element as the device is used to pump liquid from the reservoir through the dispensing tube. Thus, in the valve closed position the ball engages with the seating in the piston rod to prevent liquid from being sucked back through the piston, and in the valve open position floats freely above the seating, with the path of travel of the ball, but not the flow of liquid, being restricted by the said restraining element e.g. in the dispensing tube.

Furthermore, the dispensing tube may comprise a plurality of tube portions, e.g. two, three or four such portions, a first one of which is connected to the piston rod. The remainder are then connected together or to the first tube portion, each adjacent pair of tube portions conveniently being connected via a suitable connector piece. Also, any such tube portions are preferably of decreasing internal diameter along the length of the dispensing tube away from the pump, with the first portion being of a first internal diameter, typically slightly larger than that of the piston rod, a second portion being of a second and smaller internal diameter, and so on (as necessary) along the length of the dispensing tube. Alternatively, where the dispensing tube is of a unitary structure, that too may have an internal diameter decreasing along its length away from the piston rod.

Where the tube portions are of different internal diameters, the connecting pieces may be arranged to adapt a preceding to a succeeding diameter and thus may comprise combined connector and adaptor pieces. Furthermore, while the valve ball restraining element may be disposed adjacent that end of the dispensing tube or tube portion connected to the piston rod, for example, as a circlip or the like, it is preferred that the element should be disposed within the first connector/adaptor along the length of the dispensing tube. Thus, the ball restraining element is preferably disposed within (and, more preferably, is part of) the connector/adaptor piece adapted to connect the dispensing tube portion connected to the piston rod to the next adjacent dispensing tube portion. For example, the connector/adaptor may include one or more ribs or crosspieces or the like to restrain further upward movement of the ball.

The dispensing tube or tube portions, connectors and/or adaptors, and dip tube preferably may comprise a thermoplastics material such as polypropylene or polyvinyl chloride e.g. UPVC (unplasticised PVC). Also, where such plastics materials are employed the various connected elements may be constructed and arranged to be friction fitted together, for example, out of a kit of parts as defined further below.

Alternatively, the dispensing tube may comprise a telescopic arrangement of tubes. Also, whatever dispensing tube arrangement is provided, the tube may include a curved dispensing head, and a rose may be connected to or form part of the dispensing head.

In any of the above arrangements, the pump too is preferably one constructed of a suitable plastics material or materials. Furthermore, the pump should preferably be a single action pump which on a downstroke discharges liquid and on an upstroke is itself recharged with liquid from the reservoir. In addition, the pump preferably includes means such as a spacing collar or the like disposed on the piston rod to reduce any load which may be transferred from the dispensing tube to the piston in use.

The means to permit the piston rod and dispensing tube combination to be gripped and held steady with a hand preferably comprises a tubular sleeve adapted to slide onto the outer surface of that end or portion of the dispensing tube adjacent the piston rod and to provide grippable portions engaged with the dispensing tube. Again, such a sleeve may comprise a plastics material, for example, unplasticised PVC and may be arranged as a friction fit on the outside of the dispensing tube.

In the device of the invention, the dispensing tube may be of the order of about 2 to about 3 feet (about 60 to about 90 cm) in length. Thus, the combined length of the reservoir and dispensing tube may be of the order of about 3 to about 4 feet (about 90 to about 120 cm). That being so, it is convenient for packaging purposes to provide the device in kit form in which at least the dispensing tube and reservoir are disassembled. Thus, the invention includes a device in kit form comprising at least the following:

(i) a container to provide a liquid reservoir and having an upper mouth,

(ii) piston-cylinder pump sealingly mountable within the mouth of the container,

(iii) means to connect the pump to the container at its mouth,

(iv) a dip tube,

(v) one or more parts of a dispensing tube arrangement and, optionally,

(vi) a rose.

The dispensing device in accordance with the invention will now be described by way of example with reference to the accompanying drawings in which:

Figure 1 shows a side view of one form of the device with the container partially broken away,

Figure 2 shows an enlarged longitudinal cross-section at the container neck of the device of Figure 1,

Figure 3 shows a perspective view of a kit of parts for another form of the device,

Figures 4(a) and 4(b) show detailed enlarged perspective views broken away of alternative connector/adaptor pieces of the device of Figure 3,

Figure 5 shows a detailed enlarged perspective view partially broken away of a variation of the pump of the device of Figures 1 and 3, and

Figure 6 shows a device assembled from parts shown in Figures 3, 4(a), 4(b) and 5.

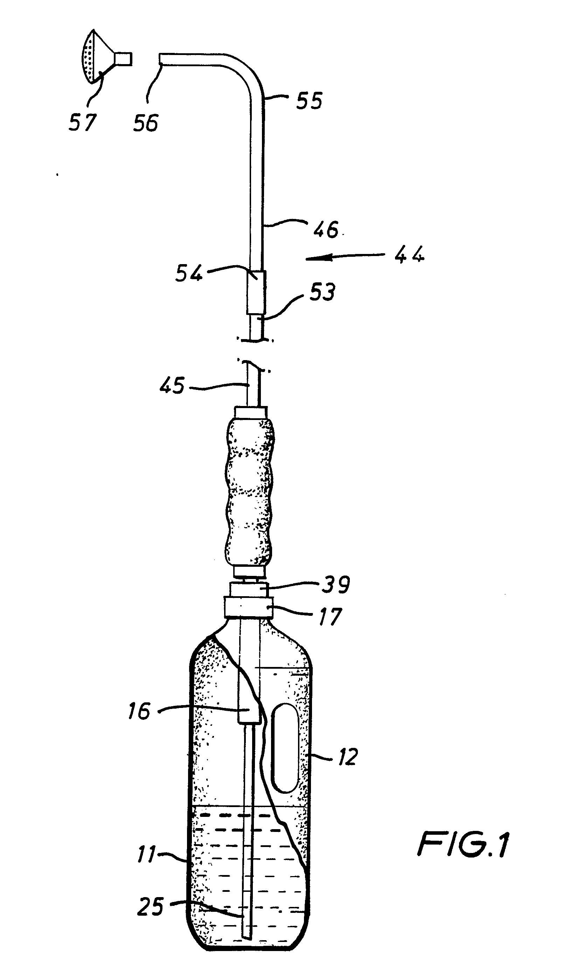

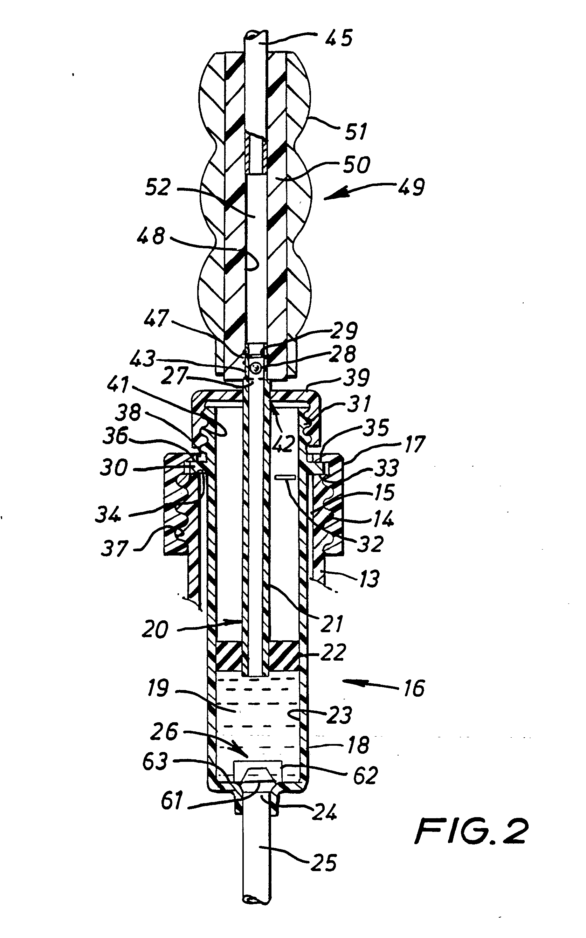

Referring to the drawings, the device shown in Figures 1 and 2 comprises a container 11, typically an elongated lightweight moulded plastics bottle container of about 2 litre capacity, having an integral handle 12. The container has an upper neck 13, including a threaded portion 14, and defining a mouth 15. Disposed within the mouth 15 is a piston-cylinder pump 16, typically a 30 ml dose glass ball valve pump e.g. as supplied by Englass (registered Trade Mark) in England, which is sealingly mountable at the mouth 15 via a threaded closure cap 17.

The pump 16 comprises a cylinder 18 defining a chamber 19 and having a piston member 20 disposed for reciprocal movement therein. The piston member 20 comprises a hollow piston rod 21 and a piston 22 which contacts the cylinder side wall 23 and which is slidably mounted in the cylinder chamber 19. At its lower end the cylinder 18 includes an inlet 24 to which is connected (by a push-fit connection) a dip tube 25 (which may have a curved lower portion - not shown) extending to the bottom of container 11.

At inlet 24 the pump includes a flap valve 26 comprising a flap 61 trapped within a cage 62. The valve 26 is disposed and arranged so as to open (with flap 61 lifted out of contact with upper rim 63 of inlet 24) and thus to permit entry of liquid into the cylinder chamber 19 from the dip tube 25 on the upstroke of the piston member 20, and to close (with flap 61 then disposed seated on the valve seating provided by rim 63) and thus to permit dispensing of liquid through the hollow piston rod 21 on the downstroke of the piston member 20. In addition, a second valve comprising a valve seating 27, a ball 28 and, for example, a ball-retaining circlip 29, is provided at the end of piston rod 21 remote from the piston 22. That second valve functions in the same manner as valve 26, except that the ball 28 floats free of the seating 27 on the piston downstroke, and seats on the seating on the upstroke to prevent suck-back of any liquid which has then passed through the second valve, but which has not by then been dispensed. Also, circlip 29 restrains upward movement of the ball and may be disposed as shown or in member 50 or tube portion 45.

At its upper end the cylinder 18 includes an outwardly disposed flange portion 30, above which there is a threaded portion 31, and below which there are one or more (typically two-opposed) breather slots 32. The flange portion 30 is of a size to permit its lower face 33 sealingly to engage with upper rim 34 of the container mouth 15 and its upper face 35 sealingly to engage with the inner face 36 of the closure cap 17.

The closure cap 17 includes an inner thread 37 engageable with the threaded portion 14 of the container neck 13. The cap 17 also includes a through aperture 38 permitting its disposal around the cylinder threaded portion 31. The cap 17 can then be disposed in sealing engagement with cylinder 18 via faces 35 and 36 and held in such engagement by a collar 39 having an inner thread 41 which can engage with the cylinder threaded portion 31.

The collar 39 includes an aperture 42 through which the piston rod 21 can pass and, when threaded on the cylinder end and tightened, holds cap 17 against flange portion 30 so as to provide a seal between faces 35 and 36. Similarly, the cap 17 when threaded on the container neck 13 and tightened holds the cylinder 18 and its flange portion 30 so as to provide a seal between face 33 and rim 34, while still permitting the chamber 19 to breathe through slots 22 into container 11 on the upstroke of the piston member 20.

At its end remote from piston 22, the piston rod 21 includes a neck portion 43 of smaller outside diameter than the remainder of the piston rod 21 to permit connection to rod 21 of a dispensing tube 44 comprising first and second tube portions 45 and 46, and a tubular member 50. The neck portion 43 includes ribs 47 or the like to grip the inside surface 48 of the tubular member 50 via which tube portion 45 is connected to piston rod 21.

The tubular member 50 together with an outer ribbed member 51 forms a handle 49 which can be gripped by the fingers. The tubular member 50 has a through passage 52 of a diameter approximating to that of the outside diameter of tube portion 45 whereby the tube portion and handle can be tightly push-fitted together. At its end 53 remote from the piston rod 21 the tube portion 45 is sealingly joined to the second dispenser tube portion 46 via a connector 54, and the second tube portion 46 at its end 55 remote from the connector 54 is bent through 90° to form a dispensing head 56. Also, if desired, a detachable rose 57 may be provided at head 56.

As will be apparent from the above description and drawings, the device of the invention may be supplied in kit form with each of the container 11, pump 16, dip tube 25, handle 49, tube portions 45 and 46, member 50 or the like, connector 54, rose 57 etc. in a disassembled condition. Furthermore, the dispensing tube 44 may comprise more than one portion 45 and more than one connector 54 whereby the length of dispensing tube 44 may be varied to suit the requirements of the user.

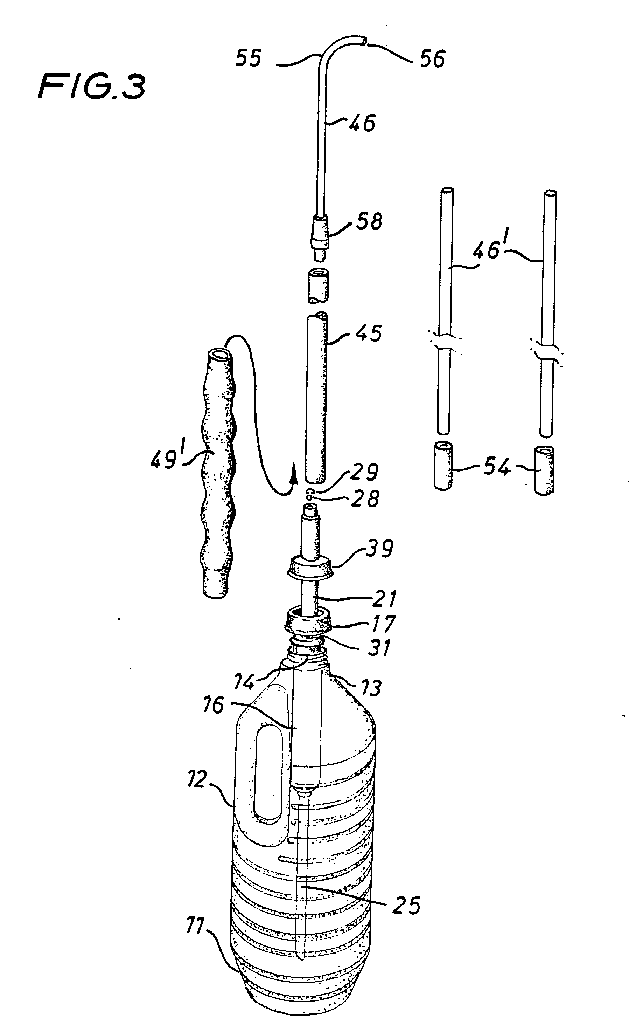

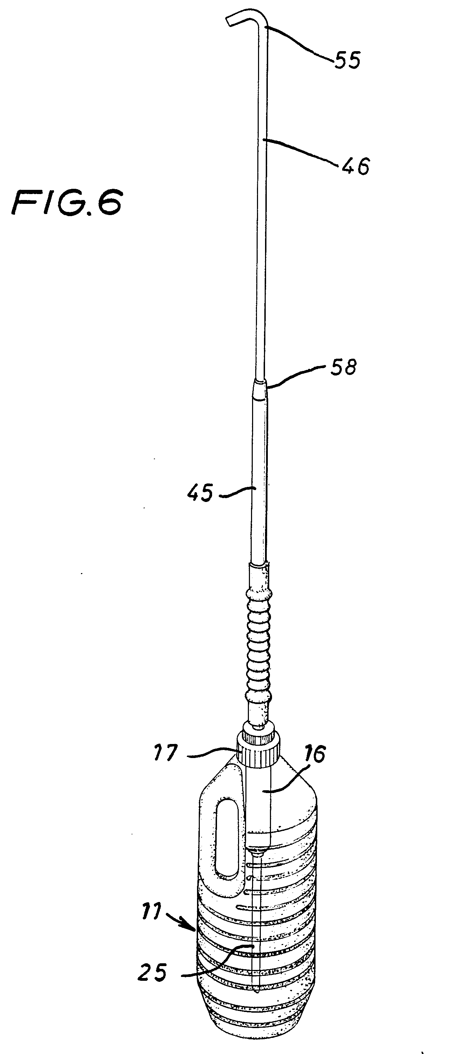

A kit form of device is illustrated in Figure 3, which shows the device in disassembled form, and Figure 6, which shows the device in assembled form. Thus, referring to Figures 3 and 6, the device shown comprises various parts common to the device of Figures 1 and 2, and identified by the same numerals. However, the device also differs from that shown in the earlier Figures in that the inner tubular member 50 is omitted and the first portion 45 of the dispensing tube 44 is of a larger external diameter chosen so that the tubular sleeve handle 49' can be slid onto the outer surface of the lower end of the first tube portion 45 to provide finger grippable means engaged therewith. In addition, the second tube portion 46 is of smaller diameter than the first tube portion 45, and the tube portions 45 and 46 are connectable via a connector/adaptor 58. As will be appreciated, the tube portions 45 and 46 also have internal diameters which are in the same relationship as their external diameters.

As shown in Figure 6, the assembled device may be one in which the tube portions 45 and 46 are directly connected via connector/adaptor 58. However, if desired there may be additional intermediate tube portions 46' and additional connectors 54 to provide additional length to the overall dispensing tube 44.

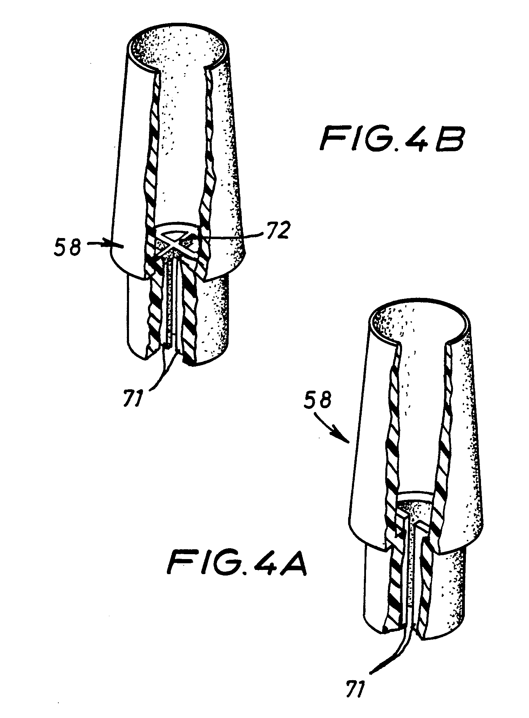

Furthermore, as shown in Figures 4(a) and 4(b) for a connector/adaptor 58, the connector/adaptor (or if desired the first connector 54) may include opposed longitudinal ribs 71. Where such ribs are provided they can function to restrain further upward movement of the ball 28, and the circlip 29 may be omitted so that the ball is then free to float in tube 45. Also, if desired or necessary, and as shown in Figure 4(b), the connector/adaptor or connector may include a cross-piece 72 to provide strength. Alternatively, the cross-piece may be used alone to restrain the ball.

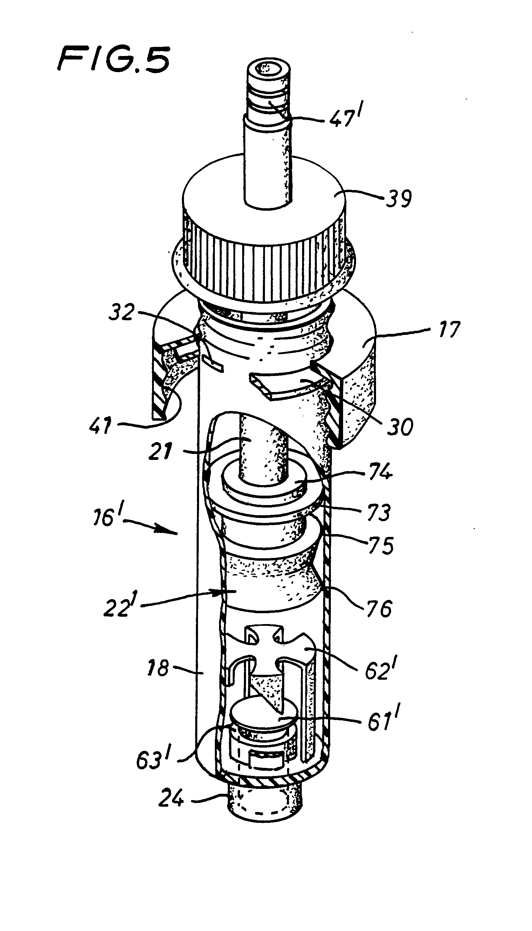

In addition, referring to Figure 5, the pump may include a lower valve cage of cruciform configuration as shown for cage 62' and a disc-like flap valve 61' which can engage with a valve seating rim 63'. Also the pump may include an optional spacing collar 73 disposed on the piston rod, for example, around shoulder 74 just above piston 22'. The function of the collar 73 is to reduce any load on the piston 22' which may be transferred from the dispensing tube 44 to the piston in use. As will be appreciated, and especially where the dispensing tube 44 is of a significant length, the tube as it is moved up and down in a pumping action can tend to apply a sideways force to those parts 75 and 76 of the piston in contact with cylinder side wall 23. Such a force can lead to excessive wear on the piston and can be reduced by the use of the collar 73.

On first use the device of the invention is assembled, for example, in the form shown in Figures 1 and 6, with the container being filled with water prior to connecting pump 16 at neck 13. Thereafter, the assembled device can be used to dispense water to a hanging basket or the like by holding the device via handles 12 and 49 (or 49'), and positioning the head 56 or rose 57 above the soil and/or plants in the basket. When so positioned water can be dispensed from the device by holding the dispensing tube 44 steady via handle 49 (or 49') and moving the container 11 in a reciprocal action to pump water from the container and through dispensing tube 44 to the basket. During such dispensing suck-back of any water in tube portion 45 is prevented by ball 28 when seated on seating 27. Also, because the ball 28 when so seated permits water to be held in tube portion 45 etc., water can be dispensed from head 56 either as a slow "dribble" or as a fast stream.

It is to be understood, of course, that the invention is not limited to the details of the device specifically described above. Thus, for example, the dispensing tube 44 may comprise a telescopic tube arrangement and the container may include a capped filling aperture separate from mouth 15 so that, if desired, the pump may be permanently sealed in mouth 15. Also, the container 11 may be of a variety of shapes and capacities, it may be transparent or opaque, and the handle 12 may be disposed at any other convenient position.

Furthermore, while the dispensing and dip tubes and connectors are conveniently tubes formed of plastics material such as polypropylene or polyvinyl chloride, and the container also is conveniently a plastics container, other materials may be used to form or fabricate those items as desired. In addition, the dispensing tube may include a dispensing head portion separate from second tube portion 46, and the head may be provided with a higher or lower than 90° curve. Also, the handle 49 may be a one-piece handle.

**Claims**

1. A liquid dispensing device suitable for dispensing water to plants disposed in a hanging plant holder, which device comprises a sealable container for holding a reservoir of liquid, the container having an upper mouth and including means to hold the container with a hand, a piston-cylinder pump having a feed tube arranged to dip into the lower portion of a liquid reservoir when held in the container to feed liquid to the pump cylinder through a first valve arrangement adjacent the lower end of the cylinder, the pump being sealingly mounted in the upper container mouth, and the pump including a hollow piston rod having a second valve arrangement therein through which the pump on a downstroke can upwardly dispense liquid previously supplied on an upstroke to the cylinder from the reservoir via the first valve, an elongated dispensing tube reciprocable with the piston rod to receive liquid dispensed from the piston rod, and means to permit the rod and dispensing tube combination to be gripped and held steady with a hand, the device being arranged such that when the rod and dispensing tube are held steady with one hand and the container is held and reciprocated with the other hand, liquid can be pumped from the container reservoir and dispensed from the end of the dispensing tube remote from the container.

2. A device according to claim 1, wherein either or both of the first and second valves are ball valves.

3. A device according to claim 1, wherein the first valve is a flap valve and the second valve is a ball valve.

4. A device according to claim 2 or claim 3, wherein the second valve is a ball valve comprising an arrangement in which the the valve ball is restrained when the valve is closed by a valve seating in the piston rod and when the valve is open by a restraining element disposed within part of the dispensing tube.

5. A device according to any one of the preceding claims, wherein the dispensing tube comprises a plurality of tube portions, with each adjacent pair of dispensing tube portions preferably being connected via a connector piece.

6. A device according to claim 5, wherein the tube portions are of decreasing internal diameter along the length of the dispensing tube away from the pump, and a first tube portion connected to the piston rod preferably has an internal diameter which is larger than the internal diameter of the piston rod.

7. A device according to any one of claims 4 to 6, wherein the ball restraining element either is disposed adjacent the end of the dispensing tube or tube portion connected to the piston rod or is disposed within a connector piece adapted to connect the dispensing tube portion connected to the piston rod to the next adjacent dispensing tube portion.

8. A device according to any one of the preceding claims, wherein the pump has an unbiassed action.

9. A device according to any one of the preceding claims, wherein the pump includes means disposed on the piston rod to reduce any load transferred from the dispensing tube to the pump piston in use.

10. A device according to any one of the preceding claims, wherein the means to permit the piston rod and dispensing tube combination to be gripped and held steady with a hand comprises a tubular sleeve adapted to slide onto the outer surface of that end or portion of the dispensing tube adjacent the piston rod and to provide grippable portions engaged with the dispensing tube.

11. A device according to any one of the preceding claims in kit form and comprising:

(i) a container to provide a liquid reservoir and having an upper mouth,

(ii) a piston-cylinder pump sealingly mountable within the mouth of the container,

(iii) means to connect the pump to the container at its mouth,

(iv) a dip tube,

(v) one or more parts of a dispensing tube arrangement and, optionally,

(vi) a rose.

0 182 667

FIG.1

*FIG.2*

FIG.3

FIG.4B

58 → 72

71

58

FIG.4A

71

# FIG.5

0 182 667

## FIG.6